# EUROPEAN PATENT APPLICATION

(11) **EP 3 716 439 A2**
(43) Date of publication of application: **30.09.2020**
(21) Application number: 20166686.4
(22) Date of filing: 30.03.2020
(51) Int. Cl.: H02J 7/00, G06F 21/31, H01M 2/34, H01M 10/42, H04W 12/06

(54) **BATTERY PACK AND/OR BATTERY CHARGER HAVING DISABLING FUNCTIONS AND METHOD OF OPERATING THE SAME**

(30) Priority: 28.03.2019 US 201962825528 P
(71) Applicant: Techtronic Cordless GP, Anderson, SC 29621 (US)
(72) Inventor: HUGGINS, Mark, Anderson, SC 29621 (US); PREUS, Michael, Piedmont, SC 29673 (US); WHITMIRE, Greenville, SC 29609 (US)
(74) Representative: Stevenson-Hill, Jack Patrick

(57) **Abstract**

A battery pack, a battery charger, and related method of operation. The battery pack includes a housing, one or more battery cells within the housing, a user-interface configured to receive an input from a user, and a controller having an electronic processor and a memory. The controller is configured to receive a signal, from the user-interface, corresponding to the input, verify the signal, and enable the battery pack based on verification.

## Description

### TECHNICAL FIELD

The present invention relates to a battery or battery pack, a battery charger, and methods of operating the battery pack and/or the battery charger.

### BACKGROUND

Electrical device, such as, a power tool, can be powered by a battery pack. Some battery packs are rechargeable and they may be charged in a compatible battery charger.

### SUMMARY

In a first aspect, the present invention provides a battery pack including a housing, one or more battery cells within the housing, a user-interface configured to receive an input from a user, and a controller having an electronic processor and a memory. The controller is configured to receive a signal, from the user-interface, corresponding to the input, verify the signal, and enable the battery pack based on the verification.

In one embodiment of the first aspect, the controller is further configured to disable the battery pack based on the verification.

In one embodiment of the first aspect, the battery pack further comprises a switch.

In one embodiment of the first aspect, the switch is configured to electrically connect two or more battery cells from each other. The battery pack is enabled by closing the switch.

In one embodiment of the first aspect, the switch is configured to electrically connect the one or more battery cells from an electrical terminal. The battery pack is enabled by closing the switch.

In one embodiment of the first aspect, the user-interface is at least one selected from a group consisting of a push-button keypad, a touch screen, a biometric scanner, and a lock.

In one embodiment of the first aspect, the user-interface includes a fuel gauge and a button.

In one embodiment of the first aspect, the input is received via the button.

In a second aspect, the present invention provides a method of operating a battery pack including a housing, one or more battery cells within the housing, a user-interface, and a controller having an electronic processor. The method includes receiving, via the user-interface, an input (from a user), and receiving, via the controller, a signal from the user-interface corresponding to the input. The method further includes verifying, via the controller, the signal, and enabling the battery pack based on verification.

In one embodiment of the second aspect, the method further comprises disabling the battery pack based on the verification.

In one embodiment of the second aspect, the step of enabling the battery pack includes closing a switch.

In one embodiment of the second aspect, the switch is configured to electrically connect the one or more battery cells.

In one embodiment of the second aspect, the switch is configured to electrically connect the one or more battery cells (optionally, to an electrical terminal).

In a third aspect, the present invention provides a battery charger configured to charge a battery pack. The battery charger includes a housing, a battery receptacle configured to receive the battery pack, and a locking apparatus. The locking apparatus is configured to be placed in: a locked state in which removal of the battery pack from the battery receptacle is prohibited, and an unlocked state in which removal of the battery pack from the battery receptacle is allowed.

In one embodiment of the third aspect, the locking apparatus includes one or more lock bars.

In one embodiment of the third aspect, the locking apparatus includes one or more locking apertures.

In one embodiment of the third aspect, the battery charger further comprises a user-interface configured to receive an input.

In one embodiment of the third aspect, the locking apparatus is placed in the locked state or the unlocked state based on the input.

In one embodiment of the third aspect, the user-interface is at least one selected from a group consisting of a push-button keypad, a touch screen, a biometric scanner, and a lock.

In one embodiment of the third aspect, the locking apparatus includes an actuator configured to move the locking apparatus in the locked state or the unlocked state.

Where appropriate, any of the optional features (embodiments) described above in relation to one aspect of the invention may be applied to another aspect of the invention.

Other aspects of the present invention will become apparent by consideration of the detailed description and accompanying drawings.

### BRIEF DESCRIPTION OF THE DRAWINGS

Figs. 1A & 1B illustrate a battery pack according to some embodiments of the present invention.
Fig. 2 is a block diagram of a control system of the battery pack of Figs. 1A & 1B according to some embodiments of the present invention.
Fig. 3 is a front view of the battery pack of Figs. 1A & 1B illustrating a fuel gauge according to some embodiments of the present invention.
Fig. 4 is a flowchart illustrating a processor, or operation, of the battery pack of Figs. 1A & 1B.
Figs. 5A-5C illustrate a charger according to some embodiments of the present invention.

### DETAILED DESCRIPTION

Before any embodiments of the present invention are explained in detail, it is to be understood that the present invention is not limited in its application to the details of construction and the arrangement of components set forth in the following description or illustrated in the following drawings. The present invention is capable of other embodiments and of being practiced or of being carried out in various ways.

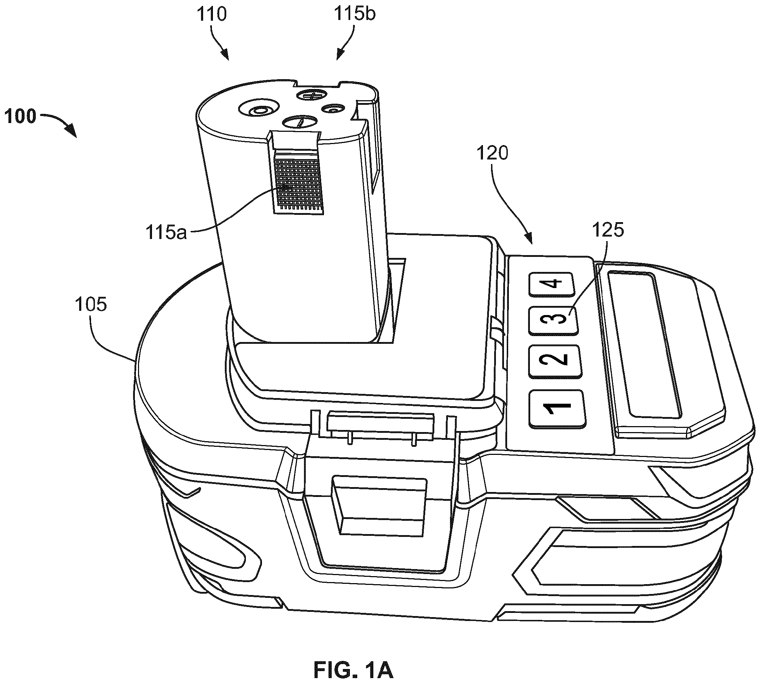

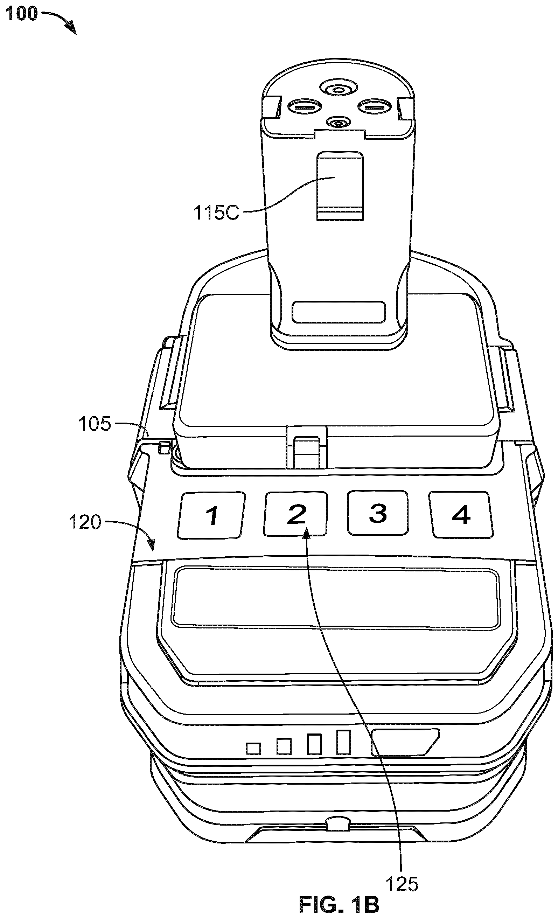

Figs. 1A and 1B illustrate a battery pack 100 according to some embodiments of the present invention. The battery pack 100 includes a housing 105 configured to couple the battery pack 100 to an electrical device. In some embodiments, the battery pack 100 is a power tool battery pack and the electrical device is a power tool device, such as, for example, a circular saw, a driver drill, a reciprocating saw, a band saw, an impact wrench, a right-angle drill, a work light, a ruggedized worksite speaker, a ruggedized worksite radio, a dust extractor, and the like. In other embodiments, the electrical device is a battery charger. In the illustrated embodiment, the housing 105 includes a mechanical coupler 110 and one or more electrical couplers 115a, 115b, 115c to mechanically and electrically couple the battery pack 100 to the electrical device via reciprocal mechanical and electrical features of the electrical device. Although illustrated as a stem mechanical coupler, in other embodiments the mechanical coupler 110 is a rail mechanical coupler.

In the illustrated embodiment, the battery pack 100 further includes a user-interface 120 located on the housing 105. The user-interface 120 may be configured to output and/or receive information to/from a user. For example, the user-interface 120 may be configured to receive an input from the user. In the illustrated embodiment, the user-interface 120 includes one or more input devices 125 (for example, push-buttons).

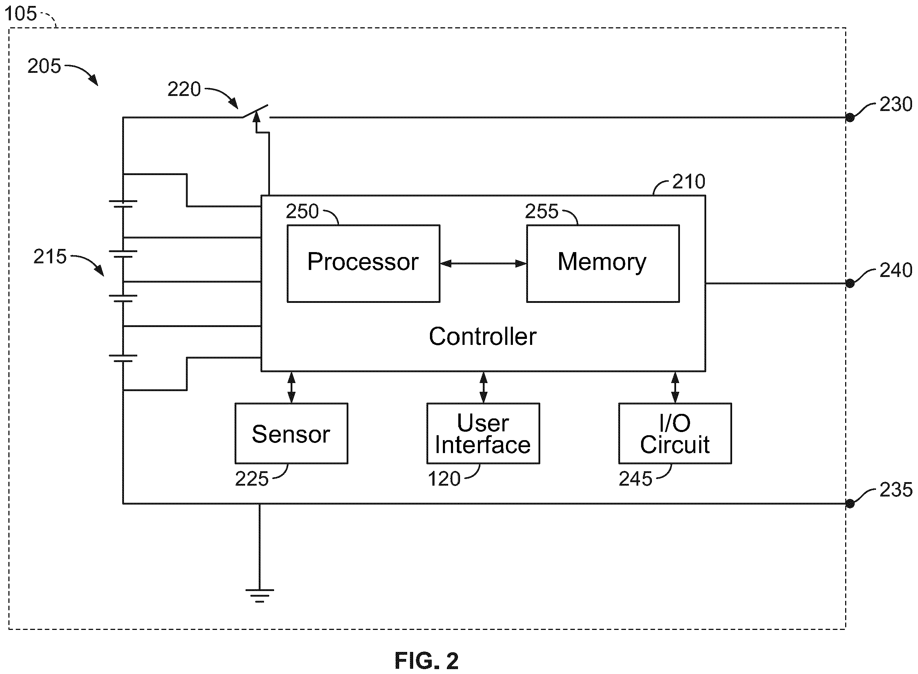

Fig. 2 illustrates a block diagram of a control system 205 of the battery pack 100 according to some embodiments of the present invention. In the illustrated embodiment, the control system 205 includes, among other things, a controller 210, a plurality of cells 215, one or more switches 220, one or more sensors 225, a first electrical input/output (I/O) terminal 230, a second electrical I/O terminal 235, a communication I/O terminal 240, an I/O circuit 245, and the user-interface 120.

The controller 210 includes a processor 250 and memory 255. The memory 255 stores instructions executable by the processor 250, for example, to implement the functionality attributed to the controller 210 described herein. In some instances, the controller 210 (also referred to as an electronic controller) includes one or more of a microprocessor, digital signal processor (DSP), field programmable gate array (FPGA), application specific integrated circuit (ASIC), or the like.

The plurality of cells 215 may be a plurality of battery cells having any battery chemistry, such as but not limited to, lead-acid, Nickel-cadmium ("NiCd"), Nickel-Metal Hydride ("NiMH"), Lithium ("Li"), Lithium-ion ("Li-ion"), another Lithium-based chemistry or another rechargeable or non-rechargeable battery chemistry. Although illustrated as four cells arranged in series, in other embodiments, the plurality of cells 215 may be one or more cells arranged in series, parallel, or a combination of series and parallel, in order to produce a nominal output voltage (e.g., 4 volts, 12 volts, 14 volts, 18 volts, 19 volts, 28 volts, a voltage between 4 and 28 volts, or another voltage).

The switch 220 (e.g., a field effect transistor (FET) or relay) is configured to electrically connect/disconnect the plurality of cells 215 from the first electrical I/O terminal 230. In some embodiments, the control system 205 includes additional switches for electrically connecting/disconnecting the plurality of cells 215. In some embodiments, each cell 215 has a respective switch for electrically connecting/disconnecting the cell 215 from the other cells 215 and/or the first electrical I/O terminal 230.

In some embodiments, the first electrical I/O terminal 230 is electrically coupled to electrical coupler 115b, while the second electrical I/O terminal 235 is electrically coupled to electrical coupler 115a. In some embodiments, the electrical coupler 115c is a communication coupler electrically coupled to communication I/O terminal 240. The electrical couplers 115a, 115b, 115c are configured to receive charging current and to provide discharging current to and from, respectively, the battery cells 215 and the electrical device.

The sensors 225 may be configured to sense one or more characteristics of the battery pack 100 and provide an indication of the sensed characteristic to the controller 210. For example, the sensors 225 may include electrical sensors configured to sense one or more electrical characteristics of the battery pack 100 (for example, a voltage (such as individual cell voltage and/or a stack voltage), a current, and a temperature). In some embodiments, the sensors 225 include, instead or in addition, a water detection sensor, a tamper sensor, and/or an acceleration sensor (for example, an accelerometer). The water sensor may be configured to detect an intrusion of water into the housing 105. The tamper sensor may be configured to detect tampering of the battery pack 100 and/or of the battery pack housing 105. The acceleration sensor may be configured to detect an acceleration of the battery pack 100. In some embodiments, the acceleration sensor is configured to detect a drop impact, a free fall, and/or spikes in g-force.

The battery pack 100 is configured to electrically and/or communicatively connect with the electrical device via at least one of the first electrical input/output (I/O) terminal 230 (and electrical coupler 115b), the second electrical I/O terminal 235 (and electrical coupler 115a), the communication I/O terminal 240 (and electrical coupler 115c), and the I/O circuit 245. In some embodiments, the battery pack 100 is configured to provide power to the electrical device via the first electrical input/output (I/O) terminal 230 and the second electrical I/O terminal 235. In other embodiments, the battery pack 100 is configured to receive power via the first electrical input/output (I/O) terminal 230 and the second electrical I/O terminal 235. The battery pack 100 may be further configured to communicatively connect to the electrical device via the communication I/O terminal 240 to exchange information and/or commands regarding the battery pack 100 and/or the electrical device.

The I/O circuit 245 is configured to provide communication between the battery pack 100 and one or more external electronic devices. For example, the I/O circuit 245 includes, in some embodiments, an antenna and a transceiver to wirelessly communicate with the external electronic devices. In some embodiments, instead or in addition, the I/O circuit 245 includes a physical port with terminals to enable wired communications with the external electronic devices. The external electronic device may be, but is not limited to, an external desktop computer, laptop, smartphone, tablet, server, and the like. In some embodiments, the I/O circuit 245 communicates with the one or more external electronic devices via a network. The network may be, for example, a wide area network (WAN) (e.g., a TCP/IP based network, a cellular network, such as, for example, a Global System for Mobile Communications [GSM] network, a General Packet Radio Service [GPRS] network, a Code Division Multiple Access [CDMA] network, an Evolution-Data Optimized [EV-DO] network, an Enhanced Data Rates for GSM Evolution [EDGE] network, a 3GSM network, a 4GSM network, a 5G network, a Digital Enhanced Cordless Telecommunications [DECT] network , a Digital AMPS [IS-136/TDMA] network, or an Integrated Digital Enhanced Network [iDEN] network, etc.). In other embodiments, the network is, for example, a local area network (LAN), a neighborhood area network (NAN), a home area network (HAN), or personal area network (PAN) employing any of a variety of communications protocols, such as Wi-Fi, Bluetooth, ZigBee, etc.

As stated above, the user-interface 120 may be configured to output and/or receive information to/from a user. The user-interface 120 may include, in addition to or in lieu of input devices 125, one or more displays (for example, a primary display, a secondary display, etc.), one or more indicators (for example, a light-emitting diode (LED)), and/or one or more additional input devices (for example, touch-screen displays, a plurality of knobs, dials, switches, buttons, etc.). The display may be, for example, a liquid crystal display ("LCD"), a light-emitting diode ("LED") display, an organic LED ("OLED") display, an electroluminescent display ("ELD"), a surface-conduction electron-emitter display ("SED"), a field emission display ("FED"), a thin-film transistor ("TFT") LCD, etc.

In one embodiment of operation, the pack 100 may be configured to authenticate a user, and enable/disable the battery pack 100 based on the authentication. For example, in the illustrated embodiment, a user may enable/disable the pack 100 by inputting, or entering, a defined input (for example, a user-set code) using user-interface 120 (for example, using input devices 125 of user-interface 120). The controller 210 may receive the input from the user-interface 120, verify the input (for example, verifying that the correct input has been entered by comparing the input to a pre-stored code in the memory 255), and enable/disable the pack 100 based on verification of the input (e.g., enable the pack 100 in response to a match of the input code with the pre-stored code and disable the pack 100 in response to a mismatch). In some embodiments, the controller 210 enables the battery pack 100 by activating the switch 220, thus allowing current to be output by the pack 100. Additionally, the controller 210 may disable the battery pack 100 by deactivating switch 220, thus prohibiting current to be output by the pack 100. In other embodiments, the controller 210 may disable the battery pack 100 by placing the pack 100 into a sleep mode or another mode in which requests for power (e.g., received over the communication I/O terminal 240) are ignored by the controller 210 and, for example, do not result in activating the switch 220.

In some embodiments, the user-interface 120 includes a touchscreen configured to receive the defined input (e.g., via soft keys displayed on the touchscreen), instead of the input buttons 125, but otherwise functions similarly to perform the verification and enabling/disabling of the pack 100 as described above.

In some embodiments, the user-interface 120 includes a biometric scanner, such as but not limited to, a fingerprint reader, a microphone configured for use for voice recognition, and/or an optical scanner configured for use for facial recognition and/or retina recognition. In such an embodiment, the controller 210 receives biometric data from the biometric scanner, verifies the biometric data, and enables/disables the pack 100 based on the verification (e.g., enable the pack 100 in response to a verification and disable the pack 100 in response to not verifying). In some embodiments, the verification includes a local comparison of the received data (e.g., finger print, voice, or image data received from the user-interface 120) with pre-stored data in the memory 255, where a match indicates a verification. In some embodiments, the verification includes transmitting the received data for verification (using similar comparison techniques) performed by one of the previously described, communicatively coupled external electronic devices via the I/O circuit 245.

In some embodiments, the user-interface 120 includes a lock configured to receive a key. In such an embodiment, the controller 210 enables/disables the battery pack 100 based on verification of the key. For example, the lock may be an electrical lock activated by an electrical key (for example, but not limited to, a touchless key such as a Near Field Communication (NFC) or Bluetooth dongle). In some embodiments, the electrical lock may be implemented by the controller 210 and the electrical lock and electrical key may communicate via the I/O circuit 245. The electrical key may transmit a code (e.g., an identifier) to the electrical lock, which compares the received key to a pre-stored code to verify the received key, and enables/disables the pack 100 based on the verification (e.g., enable the pack 100 in response to a verification and disable the pack 100 in response to not verifying). For example, in some embodiments, the verification includes a local comparison of the received key with pre-stored key in the memory 255, where a match indicates a verification. In some embodiments, the verification includes transmitting the received key for verification (using similar comparison techniques) performed by one of the previously described, communicatively coupled external electronic devices via the I/O circuit 245.

In some embodiments, the lock is a mechanical lock activated by a mechanical key. The mechanical lock may, for example, physically close a switch (e.g., the switch 220 or another such switch in series with the switch 220) when the key is, for example, inserted or inserted and rotated to unlock the battery, and open the switch when the key is, for example, removed or rotated and removed, to lock the battery.

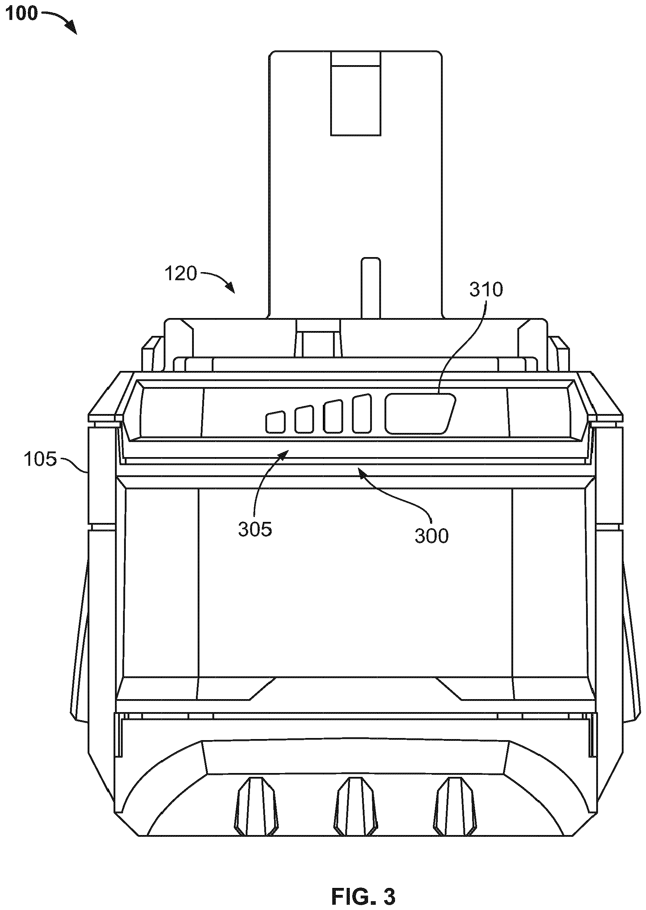

As illustrated in Fig. 3, the user-interface of the battery pack 100 may include a fuel gauge 300. In such an embodiment, the fuel gauge 300 may have a plurality of indicators 305 and a button 310. In one embodiment of operation, a user activates the button 310 and a fuel level (for example, a battery voltage percentage) is displayed via the indicators 305. For example, in response to receive of a signal from activation of the button 310, the electronic controller 210 senses a voltage of the cells using the sensors 225, calculates a charge level of the cells 215 based on the sensed voltage, and causes illumination of the indicators 305 in a manner indicative of the calculated charge level. In some embodiments, the user may enable/disable the pack 100 by inputting defined input via the button 310 of the fuel gauge. For example, the user may enter the defined input using Morse code or another input pattern. Similar to techniques described above, the defined input is verified locally or externally, for example, by comparing the defined input to a pre-stored input, and the battery pack 100 is enabled/disabled based on the verification (e.g., enable the pack 100 in response to a verification and disable the pack 100 in response to not verifying).

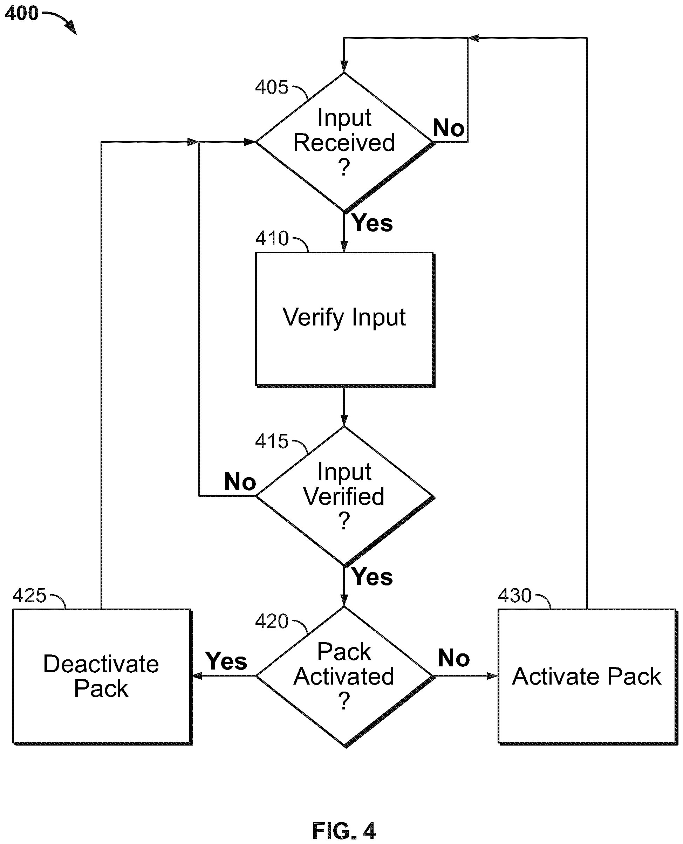

Fig. 4 illustrates a process, or operation, 400 according to some embodiments. It should be understood that the order of the steps disclosed in process 400 could vary. Furthermore, additional steps may be added to the process and not all of the steps may be required. The controller 210 (for example, via user-interface 120) determines whether an input has been received from a user (block 405). When an input has not been received, process 400 cycles back to block 405.

When an input has been received, the controller 210 verifies the input (block 410). The controller 210 then determines whether the input is verified (block 415). To verify, the controller 210 implements, for example, one of the above-described verification techniques (e.g., by comparing the input to a pre-stored input). When the input is not verified, process 400 cycles back to block 405. When the input is verified, the controller 210 determines whether the pack 100 is activated (block 420). When the pack is activated, the controller 210 deactivates the pack 100 (block 425). To deactivate, the controller 210 implements, for example, one of the above-described deactivation techniques (e.g., opening the switch 220). Process 400 then cycles back to block 405. When the pack is not activated (deactivated), the controller 210 activates the pack 100 (block 430). To activate, the controller 210 implements, for example, one of the above-described activation techniques (e.g., closing the switch 220). Process 400 then cycles back to block 405.

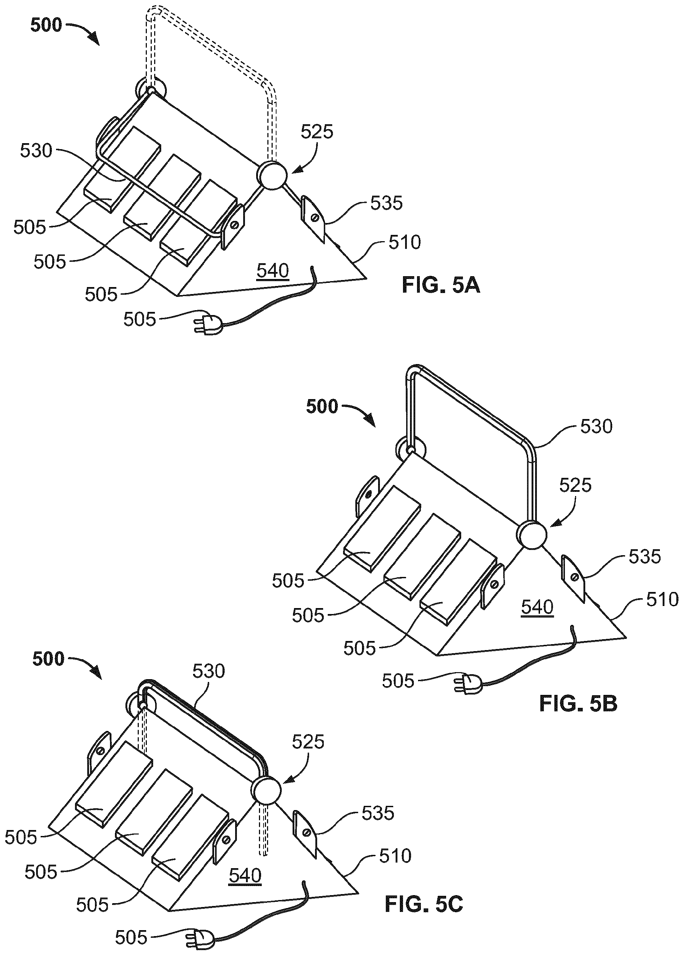

Figs. 5A-5C illustrate a charger, such as a battery charger, 500 according to another embodiment. The charger 500 may be configured to charge (for example, by providing a charging voltage and current) one or more battery packs 505. In some embodiments, the one or more battery packs 505 are substantially similar to battery packs 100. In other embodiments, the one or more battery packs 505 are different than battery packs 100.

The charger 500 may include a charger housing 510. The charger housing 510 may be formed of a plastic material, a metallic material, or a combination of both. In the illustrated embodiment, the charger 500 includes one or more battery receptacles 515 configured to receive the one or more battery packs 505. The one or more battery receptacles 515 may include physical and/or electrical couplers to couple to the battery packs 505.

The charger 500 may further include a power input 520 configured to receive power from a power supply (such as, but not limited to, an alternating-current (AC) mains voltage). The charger 500 may further include internal circuitry configured to control charging of the battery packs 505 and monitor charging of the battery packs 505.

In the illustrated embodiment, the charger 500 further includes a locking apparatus 525. The locking apparatus may include one or more lock bars 530. The one or more lock bars 530 may be configured to be in a locked state (Fig. 5A), an unlocked-travel state (Fig. 5B), and/or an unlocked standing-state (Fig. 5C). When in the locked state (Fig. 5A), the one or more lock bars 530 prevent removal of the one or more battery packs 505 from the one or more battery receptacles 515. When in the unlocked states (Figs. 5B & 5C), the one or more battery packs 505 may be removed from the one or more battery receptacles 515.

In the illustrated embodiments, the locking apparatus 525 further includes lock apertures 535. In such an embodiment, when in the locked state, the one or more lock bars 530 may be secured to the lock apertures 535. For example, the lock bars 530 may be secured to the lock apertures 535 via padlock, a built-in lock, and/or any other lock having a shackle.

In some embodiments, the charger 500 further includes a user-interface 540 and a controller. In such an embodiment, the user-interface 540 and controller may be configured to activate/deactivate the locking apparatus 525. For example, the locking apparatus 525 may include an electronically controlled lock that, in response to a lock signal from the controller, moves a shackle into a locking position and, in response to an unlock signal from the controller, moves the shackle into an unlocked position. The movement of the shackle may be driven by an actuator, such as but not limited to a motor, a solenoid, or other electro-mechanical controllable element. In the locked position. In some embodiments, the user-interface 540 is substantially similar to user-interface 120, while the controller is substantially similar to controller 210. For example, the user-interface 540 and controller may be configured to receive a defined user input to activate/deactivate the locking apparatus 525. Similar to user-interface 120, user-interface 540 may be, or include, a touchscreen, input buttons, an electric lock/key apparatus, and/or a biometric scanner (for example, a fingerprint reader, a microphone configured for use for voice recognition, and/or an optical scanner configured for use for facial recognition and/or retina recognition).

As illustrated in Fig. 5B, when in the unlocked travel-state, the lock bars 530 may be configured to be used as carrying handles allowing a user to transport the charger 500. As illustrated in Fig. 5C, in some embodiments, the one or more lock bars 530 may be placed in a storage position. In such an embodiment, the one or more lock bars 530 may slide into an aperture to be stored.

The above embodiments of the present invention provides, among other things, a battery pack, a battery charger, and methods of operating the battery pack and/or battery charger. Various features and advantages of the present invention are set forth in the claims.

## Claims

1. A battery pack comprising:
a housing;
one or more battery cells within the housing;
a user-interface configured to receive an input from a user; and
a controller having an electronic processor and a memory, the controller configured to
receive a signal, from the user-interface, corresponding to the input,
verify the signal, and
enable the battery pack based on verification.

2. The battery pack of claim 1, wherein the controller is further configured to disable the battery pack based on the verification.

3. The battery pack of claim 1 or 2, further comprising a switch.

4. The battery pack of claim 3, wherein the switch is configured to electrically connect two or more battery cells from each other, wherein the battery pack is enabled by closing the switch.

5. The battery pack of claim 3, wherein the switch is configured to electrically connect the one or more battery cells from an electrical terminal, wherein the battery pack is enabled by closing the switch.

6. The battery pack of any one of claims 1 to 5, wherein the user-interface is at least one selected from a group consisting of a push-button keypad, a touch screen, a biometric scanner, and a lock.

7. The battery pack of any one of claims 1 to 5, wherein the user-interface includes a fuel gauge and a button.

8. The battery pack of claim 7, wherein the input is received via the button.

9. A method of operating a battery pack including a housing, one or more battery cells within the housing, a user-interface, and a controller having an electronic processor, the method comprising:
receiving, via the user-interface, an input from a user;
receiving, via the controller, a signal from the user-interface corresponding to the input;
verifying, via the controller, the signal; and
enabling the battery pack based on verification.

10. The method of claim 9, further comprising:
disabling the battery pack based on the verification.

11. The method of claim 9 or 10, wherein the step of enabling the battery pack includes closing a switch, and optionally:
wherein the switch is configured to electrically connect the one or more battery cells; and/or
wherein the switch is configured to electrically connect the one or more battery cells to an electrical terminal.

12. A battery charger configured to charge a battery pack, the battery charger comprising:
a housing;
a battery receptacle configured to receive the battery pack; and
a locking apparatus configured to be placed in:
a locked state in which removal of the battery pack from the battery receptacle is prohibited, and
an unlocked state in which removal of the battery pack from the battery receptacle is allowed.

13. The battery charger of claim 12, wherein the locking apparatus includes one or more lock bars and/or one or more locking apertures.

14. The battery charger of claim 12 or 13, further comprising a user-interface configured to receive an input, and optionally:
wherein the locking apparatus is placed in the locked state or the unlocked state based on the input; and/or
wherein the user-interface is at least one selected from a group consisting of a push-button keypad, a touch screen, a biometric scanner, and a lock.

15. The battery charger of any one of claims 12 to 14, wherein the locking apparatus includes an actuator configured to move the locking apparatus in the locked state or the unlocked state.
